# EUROPEAN PATENT SPECIFICATION

(11) **EP 0 374 614 B1**
(45) Date of publication and mention of the grant of the patent: **11.08.1993**
(21) Application number: 89122624.3
(22) Date of filing: 07.12.1989
(51) Int. Cl.: G01D 5/26

(54) **Method and optical sensor for determining the position of a mobile body**
Optischer Sensor und Verfahren zur Determinierung der Position eines bewegbaren Körpers
Capteur optique et procédé pour déterminer la position d'un corps mobile

(30) Priority: 21.12.1988 IT 2303988
(43) Date of publication of application: 27.06.1990
(73) Proprietor: PIRELLI CAVI S.p.A., 20123 Milano (IT)
(72) Inventor: Cecchi, Stefano, Prato (FI) (IT); Simonelli, Francesco, Firenze (IT)
(74) Representative: Giannesi, Pier Giovanni

(56) References cited:
- FR-A- 2 410 255
- US-A- 4 493 212

## Description

The present invention refers to the field of optical sensors and particularly to a method and an optical sensor for determining the position of a mobile body moving in a rectilinear direction and transversely with respect to a fixed reference body.

Optical sensors of this type, such as, for example, that described in the British Patent n. 956 347, are already known. These include, in particular, optical sensors made mainly of three components. A luminous source integral with the fixed reference, optical detectors faced to the luminous source and also integral with the fixed reference, and an encoded plate integral with the mobile body, interposed and moving in the space between the source and the detectors.

The encoded plate is formed of a support transparent to light on which opaque areas, which prevent the passage of light, according to a code representing the position of the mobile body, are present.

Changing the position of the mobile body, the position of the plate changes too and consequently the luminous intensity captured by the light receivers.

Therefore the measurement of the luminous intensity captured by the light receivers represents the position of the mobile body.

The said known optical sensors, however, have certain disadvantages.

Primarily, the encoded plate is fragile and consequently is easily damaged; secondly, if it is submitted to spurious movements such as falling below, rising above or disalignments with respect to the mobile body, variations occur in the luminous intensity captured by the light receivers which are not due to a variation in the position of the mobile body and consequently measurement of the position of the mobile body is made unreliable by such spurious movements.

Furthermore if the light source has spurious variations in intensity, the luminous intensity captured by the receivers also varies, even when the position of the mobile body has not changed. Also in this case an incorrect measurement of the position of the mobile body is obtained.

To avoid this second disadvantage, in a known solution described in the British Patent n. 2 054 135, the plate is encoded in such a way that when the plate moves, while the intensity of the individual luminous signals captured by each light receiver varies, the sum of the luminous intensities captured by all the receivers is independent of the position of the plate and depends only on the luminous intensity emitted by the source.

The luminous intensities captured by the receivers are transformed into electrical signals and the sum of these electrical signals (not depending on the position of the mobile body) is compared with a fixed reference signal.

By means of a closed loop control circuit the signal resulting from that comparison is amplified and sent to control the supply of the luminous source. In this way if the sum of the electrical signals decreases, it means that the source is emitting a lower intensity of light than that pre-established and the control circuit increases the supply of the light source thus causing the source to return to emitting the pre-established luminous intensity.

In the same way if the sum of the electric signals increases it means that the source is emitting a luminous intensity greater than that pre-established and the control circuit reduces the supply of the luminous source, bringing the source back to emitting a luminous intensity equal to that pre-established.

To be precise, in said known optical sensor it is not the determination of the position of the mobile body that is made independent of the spurious variations in the luminous intensity of the source, but the said spurious variations which are compensated, regulating the supply of the source in such a way that it emits a constant luminous intensity.

However in order to obtain this regulation it was necessary to use a closed loop control circuit and a luminous source supply which can be regulated. Both facts which cause said known optical sensor of position to have high costs and circuital complications.

Other known optical sensors are those described in the U.S. Patent 4.493.212 and in the French Patent 2.410.255.

The optical sensors according to these two patents make use, like the optical sensor according to the above mentioned British Patent 956.347, of a device interposed between the luminous source and the optical detector or optical receiver clearly with the same inconvenience above reported for the optical sensor according to said British patent.

The purpose of the present invention is to indicate a method and an optical sensor for determining the position of a mobile body moving in a rectilinear direction and transversely with respect to a fixed reference body in which the determination of the position is not influenced by spurious movements of the encoded plate or like device.

The object of the present invention is a method for determining the position of a mobile body (1) moving along a rectilinear direction ("r") and transversely with respect to a fixed reference body (4) comprising the steps of:
- associating with said bodies (1, 4) a source of optical radiation (2) and at least two optical receivers (5, 6) aligned side by side along the direction of movement ("r") of the mobile body (1),
- converting the intensity of the optical radiation (i₁, i₂) detected by each optical receiver (5, 6) into electrical signals (I₁, I₂) of corresponding intensity,
- calculating the ratio between a first and a second combination of said electrical signals (I₁, I₂), these combinations being different from one another,
said method being characterized in that:
- the source of optical radiation has an intensity which varies in a continuous way along the direction of movement ("r") of the mobile body (1) and is associated with one of said bodies while the optical receivers are associated with, the other body,
- the optical receivers (5, 6) faces directly the source of optical radiation (2) without any interposing device and are kept always completely illuminated,
- a step of comparing the value obtained from said ratio between a first and a second combination of said electrical signals (I₁, I₂) with a predetermined scale of reference values containing a correspondence between the value obtained from said ratio and the position of the mobile body is provided.

Another subject of the present invention is an optical sensor, for determining the position of a mobile body (1) moving in a linear direction ("r") and transversely with respect to a fixed reference body (4), comprising:
- a source of optical radiation (2) and at least two optical receivers (5, 6), aligned side by side along the direction ("r") of movement of the mobile body (1), associated to said bodies (1, 4),
- means (9, 10) for transforming the intensities of the optical radiation (i₁, i₂) captured by each optical receiver (5, 6) into electrical signals (I₁, I₂) of intensities corresponding to the intensities of the optical radiations (i₁, i₂),
- means (17) for calculating the ratio between a first and a second combination of said intensities (I₁, I₂) of electrical signals, these combinations being different one from the other,
said optical sensor being characterized in that:
- the source of optical radiation (2) is integral with one of the bodies (1, 4) and has an intensity which varies in a continuous way along the direction ("r") of movement of the mobile body while the optical receivers (5, 6) are integral to the other one of said bodies and faces directly the source of optical radiation without any interposed device and are completely illuminated by said source,
- and in that means (18) are provided for comparing the value obtained from said ratio between a first and a second combination of said intensities (I₁, I₂) with a predetermined scale of reference values containing a correspondence between the value obtained from said ratio and the position of the mobile body (1).

Further uses and advantages of the present invention will become clear from the following description and from the attached drawings which are given as an explanatory example in which:
- Figure 1 represents a diagram of the optical sensor, object of the present invention;
- Figure 2 represents an enlarged detail of Fig. 1, and
- figure 3 represents the profile of the intensity of the optical radiation of the source utilised in the optical sensor object of this invention.

The method for determining the position of a body moving in a rectilinear direction transversely to a fixed reference which is the subject of this invention, is based essentially on the following steps:
- associating to a mobile body (or a fixed reference body) a source of optical radiation whose profile of intensity varies with continuity in the direction of movement of the mobile body, such as, for example, a diode laser of which the intensity of light radiation in the direction of movement of the mobile body varies according to a Gaussian curve;
- associating to the fixed reference (or the mobile body) optical receivers aligned side by side in the direction of movement of the mobile body such as, for example, the free extremities of optical fibres;
- facing the optical receivers directly towards the source of radiation, with no intermediate device, always keeping them fully illuminated;
- transforming the intensity of optical radiation captured by each optical receiver into electrical signals of an intensity corresponding to the intensity of optical radiation;
- finding the ratio between a first and a second combination of these electrical signal intensities, such combinations being different one from another. For combination we mean the operation of multiplying every single intensity of electrical signal by any numerical coefficient and making an algebric sum of the result obtained. For example, in case of having only two receivers and therefore only two intensities of electrical signal, the first combination can be the difference between the two signals, while the second combination can be the sum of the same signals. On the other hand the first combination can be formed by only one of the two electrical signals and the second combination can be formed by the other one of the two electrical signals;
- comparing the value obtained from this ratio with a predetermined scale of reference values containing a correspondence between the value obtained from that ratio and the position of the mobile body.

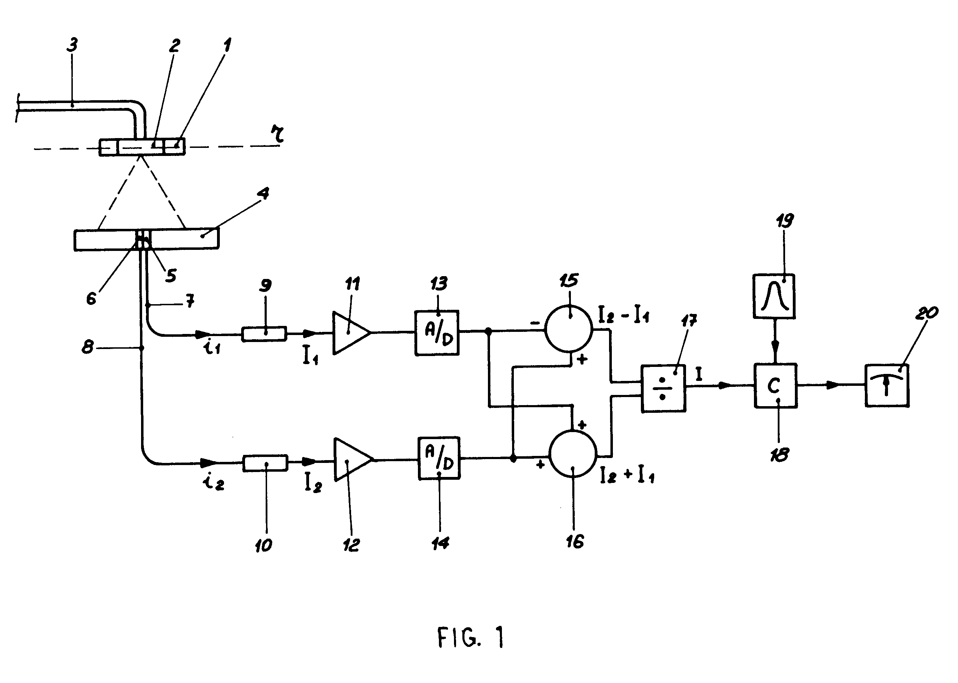

With reference to Figures 1, 2 and 3, reference Number 1 indicates a mobile body moving in a rectilinear direction "r", of which it is necessary to find the position, to which is integrally connected a laser diode 2 which emits an optical radiation in a direction perpendicular to that of the movement of the mobile body 1.

For optical radiation we mean an emission of luminous signals prised both within the visible spectrum and otuside it.

The laser diode (2), supplied by electric wires (3) from an electrical generator not shown in the figure, is, for example, of type TOLD 131 aquired from the manufacturers, Toshiba, and emits an optical radiation of wavelength λ = 830 nm.

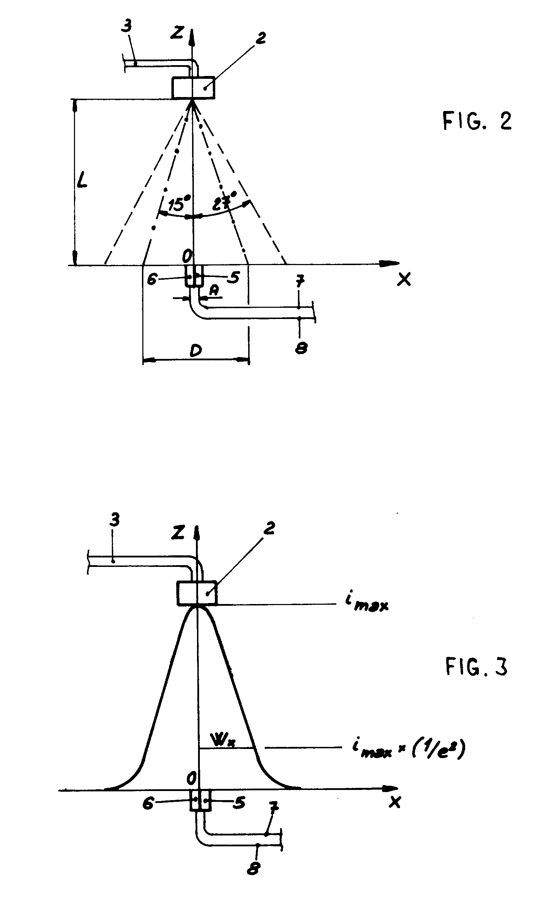

The optical radiation coming from the laser diode (2) propagates itself in the direction of emission widening out as a beam with various angles of divergence, i.e. of a non-circular cross-section. In particular, taking as reference system a set of Cartesian axes in which the z axis coincides with the axis of the laser beam and the x and the y axes define a plane perpendicular to the direction of propagation of the optical radiation, the origins of the x and y axes fall on the axis of laser beam, it can be said (see Fig. 2) that the laser beam widens out at the xy plane with a maximum angle of divergence (indicated by the dashed line) of about 27 degrees, while the minimum angle of divergence of the laser beam at the xy plane is about 10 degrees (not shown in the figure).

The laser diode (2) is fixed on the mobile body (1) in such a way that its maximum angle of divergence coincides with the direction of movement of the mobile body, such direction being in this way that of the x axis.

In addition to expanding in the way described immediately above, the laser beam presents a spatial distribution of its radiation intensity which follows a Gaussian curve. Specifically, in the chosen reference system such intensity of optical radiation has the following distribution: 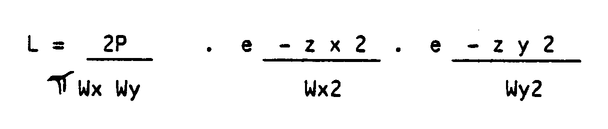
where P is the total intensity of optical radiation emitted by laser diode (2) (which is 40 m W), and Wx and Wy are the semi-widths of the Gaussian curve along the x axis and the y axis respectively when the intensity is reduced to 1/e2 of its maximum value of 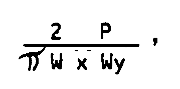
which coincides with the central axis of the laser beam.

The values of Wx and Wy thus represent the shape of the particular choice of Gaussian curve. For the Toshiba TOLD 131 laser diode Wx is about 3.8mm, while Wy, which is not shown in Fig. 3, is about 1.4 mm.

See the description below for the criteria which have led to this choice.

In particular, the intensity of optical radiation in the zx plane (see Fig. 3) along the path of the moving body follows a curve defined by: 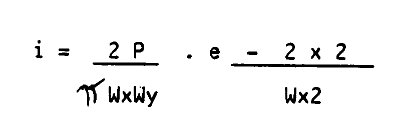
that is to say it is a Gaussian distribution in which the intensity of light radiation depends only on the distance along the x axis which separates the point under consideration from the origin of the z and x axes.

Parallel with the mobile body (1) and at a distance "L" from it, measured along the direction of propagation of the optical radiation there is a fixed reference body (4) in which are inserted two optical receivers (5 and 6).

In the particualr embodiment illustrated said optical receivers consist of two cylindrical ferrules with central holes in which are inserted the free ends of two optical fibres (7 and 8), said extremities presenting plane faces perpendicular to the axes of the two optical fibres aligned with the bases of the ferrules.

The two optical receivers are fixed together along a common generatrix, and are positioned in such a way that this common generatrix is aligned with the axis of the laser beam. Said receivers, that is to say, present their receiving plane surfaces facing the laser diode (2) which completely illuminates them, and they are placed side by side in such a way that a line joining their centres is parallel to the direction of movement of the mobile body.

The axes of the two optical receivers (5 and 6) are thus separated by a distance "A" which is approximately equal to double the radius of the ferrules, while their mid point is positioned on the origin of the system of Cartesian axes.

The two optical fibres (7 and 8) have an external diameter of 140 µ, a core diameter of 100 µ and an acceptance angle of about 15 degrees.

The outputs from the two optical fibres (7 and 8) are connected respectively to the inputs of two photodiodes (9 and 10). The outputs of the photodiodes (9 and 10) are connected to the inputs of the two amplifiers (11 and 12), and the outputs of the two amplifiers (11 and 12) are connected to the inputs of two analogue/digital converters (13 and 14).

The output of analogue/digital converter (13) is connected to the negative input of a subtractor (15), and to one of the inputs of an adder (16). The output of analogue/digital converter (14) is connected to the positive input of the subtractor (15) and to the other input of the adder (16).

The outputs of the subtractor (15) and of the adder (16) are connected to the inputs of a divider (17) whose output is connected to the input of a comparator (18).

The other input of the comparator (18) is connected to a memory (19) while the output of comparator (18) is connected to the input of an indicating instrument (20).

The photodiodes (9 and 10), the amplifiers (11 and 12), the analogue/digital converters (13 and 14), the subtractor (15), the adder (16), the divider (17), the comparator (18), the memory (19) and the indicating instrument (20) are of known types and therefore are not described in detail.

In a variation not shown here, the subtractor (15) and the adder (16) are absent from the sensor as just described, so that the outputs from the two analogue/digital converters (13 and 14) are connected directly to the two inputs of the divider (17).

Let us begin the description of the operation of the optical sensor object of the present invention by using the simplified solution:

Before beginning said description however it must be remembered that in the particular embodiment described above the laser diode (2) has been positioned on the mobile body (1) so that: its maximum angle of divergency, of about 27 degrees, coincides with the direction of movement of mobile body (1) (but it can also be positioned differently as will be explained farther down); that the laser diode (2) itself emits in the same direction optical radiation whose intensity varies according to a Gaussian curve, that is to say a continuously variable intensity of optical radiation; that the optical receivers (5 and 6) are directly facing the laser diode (2) without any device being interposed; that the receiving surfaces of the receivers are completely illuminated by the laser diode (2); that the said receivers are placed side by side along the direction of movement of the mobile body; and that at the initial position of rest of the mobile body the said receivers are symmetrically placed straddling the axis of the beam of optical radiation emitted by the laser diode (2).

In these conditions when the relative positions of the laser diode (2) and the optical receivers (5 and 6) are varied (corresponding to a change in the position of the mobile body (1) relative to that of the fixed reference body (4)) the optical receivers (5 and 6) gather an optical radiation whose intensity varies according to a Gaussian curve.

The optical radiation intensities i₁ and i₂ are conveyed by the optical fibres (7 and 8) to the photodiodes (9 and 10) which transform them into electrical signals of intensities I₁, I₂ corresponding to the intensities of optical radiation captured by the optical receivers (5 and 6) and therefore will also vary in a Gaussian manner.

The electrical signals I₁ and I₂ are then amplified by the amplifiers (11 and 12) and digitalised by analogue/digital converters (13 and 14).

The divider (17) then calculates the ratio between the digital electrical signals I₂ and I₁ , producing as its output a signal of value $\text{I = I₂/I₁}$ .
This signal is compared, by means of the comparator (18), with the contents of the memory (19), and the result of this comparison is visualised on the indicating instrument (20).
Alternatively it can be sent into other electronic circuits for further processing, as, for example, in a circuit for controlling the position of the mobile body.

A scale of the relationship between each value of the electrical signal (I) obtained from the ratio between signals I₂ and I₁ , and the corresponding position of the moving body is memorised in the memory (19), as will be explained below.

Bearing in mind that a variation of the intensity of the optical radiation emitted by the laser diode (2) by a certain factor "a" (for instance a decrease of 5%) has the effect that each point of the Gaussian curve varies its radiation intensity by exactly the same factor "a" (i.e. each point of the Gaussian curve in the example shows an intensity of radiation reduced by 5%); and that the electrical signals corresponding to the intensity of the light radiation are subject to variation of the same factor "a" (a reduction of 5% in the example), it can be concluded that an electrical signal corresponding to the ratio of electrical signals both of which were varied by the same factor "a" is independent of such variation.

Therefore the electrical signal I obtained from the ratio between the electrical signals and I₂ and I₁ , is independent of the spurious variations in the intensity of optical radiation from the source, and its value depends uniquely on the position of the receivers relative to the source.

It follows from these considerations that it is essential to have at least two optical sensors, and that they must always be completely illuminated by the source of optical radiation and that the measurable distance from the optical sensor must be not more than the diameter of the base of the cone of radiation defined by the laser beam.

The electrical signal I , obtained from the ratio between two electrical signals which vary in a Gaussian manner is not Gaussian, and therefore, to obtain a corect scale of correspondence "value of signal I position of the mobile body", it is necessary to take account of a correction factor which is determined when the sensor is being calibrated.

Thus it is not the values of a Gaussian curve which are memorised in memory (19), but values which include this correction factor in such a way that the comparison carried out by comparator (18) gives the exact position of the mobile body.

In a practical variation (the one illustrated) the subtractor 15 and the adder 16 execute the difference between, and the sum of, electrical signals I₁ and I₂ coming from the analogue/digital converters 13 and 14 . In fact the subtractor 15 performs the subtraction I₂ - I₁ , and the adder 16 the sum I₂ + I₁ , and these quantities are then divided the one by the other in the divider 17 so that the output of this last is the electrical signal $\text{I = (I₂ -I₁)/(I₂ + I₁).}$

Since in this case the electrical signals I₁ and I₂ have been treated differently from the method used in the previous case, the correspondence "value of signal I position of the mobile body" will be different, and therefore it will be necessary to apply to the Gaussian values registered in memory (19), a different correction factor, which will also be determined by an initial calibration of the optical sensor.

In the optical sensor as described it is of course possible to use more than two optical receivers ("n", for example), provided that they are all placed side by side in the direction of movement of the mobile body and that they are always completely illuminated by the source of light radiation.

In such a case the subtractor (15) and the adder (16) would be substituted by more complicated circuits which take two whatsoever combinations of the "n" electrical signals, where "combination" has the same meaning already explained in the description of the method.

The only restriction on such combinations is that they must be different one from the other.

For example with three optical receivers the electrical output signal could be obtained from the relationship $\text{I = ((I₂ - I₁)/(I₁ + I₂)) - ((I₃ - I₂)/(I₃ + I₂))}$ .

Naturally the correction factor to be applied to the Gaussian values to be recorded in the memory 19 will be different for each combination, and must be determined experimentally during calibration of the optical sensor.

Furthermore, in place of a source whose intensity varies in a Gaussian manner, it is possible to use any other type of optical radiation source whose intensity varies in a continuous way along the direction of movement of the mobile body.

For dimensioning the optical sensor object of the present invention it should be remembered that as a source a Toshiba laser/diode of type TOLD 131 has been chosen, such a diode emits a laser beam with unequal angles of divergence (specifically a maximum angle of 27 degrees and a minimum angle of 10 degrees); that the laser diode has been fixed to the mobile body so that the maximum angle of divergence coincides with the direction of movement of the mobile body; and that the optical receivers are the extremities of two optical fibres having an acceptance angle of 15 degrees.

It follows from these considerations that the orientation of the laser diode on the mobile body is not at all critical, and that any positions is acceptable provided that the angle of divergence of the laser beam in the direction of movement of the mobile body is sufficient to measure the desired displacement.

Specifically it would be possible to select laser sources with angles of divergence less different one from the other. The ideal case would be to have equal angles of divergence so that the cone of radiation would be circular, in which case the laser diode could be oriented in any direction on the mobile body for it to be able always to measure the same displacement.

For example it would be possible to use a remote laser diode and send the light radiation emitted by the laser diode along an optical fibre, using the free end of the optical fibre as a source of radiation in the form of a circular cone.

The dimensions of the optical sensor in the particular form of practical realisation illustrated were decided using the following criteria:
The optical fibres 7 and 8 were chosen having an acceptance angle of 15 degrees, and the fact that both the receivers, or rather the ends of both the optical fibres (7 and 8) must always be completely illuminated, requires the use of a conical laser beam with a semiangle of 15 degrees (shown in Fig. 2 by dash and dot). But there is nothing to prevent the use of optical fibres with larger or smaller acceptance angles than that above, or laser beams with larger or smaller cone angles.

When the semiangle of the cone to be used has been decided the distance "L" between source and optical receivers can be chosen as a compromise between the need to have a large distance so that the diameter of the base of the cone (and therefore the maximum distance which can be measured) is as great as possible, and the necessary condition that the ends of the optical fibres receive sufficient intensity of optical radiation for it to be accurately and reliably measurable.

The second requisite depends mainly on the sensitivity of the photodiodes and the electronic circuits used.

Accepting the above choices and using a Toshiba Type TOLD 131 diode laser the preferred value for "L" is 7.5 mm, but any value between 5 and 10 mm is acceptable, and it is evident that by employing other sources of optical radiation it would be possible to use a different distance for "L".

Since the maximum measurable distance is given by the diameter "D" of the base of the cone of the laser beam less the distance "A" between the ends of the optical fibres, to have the measurable distance as great as possible the optical fibres should be as close together as possible.

However the ends of the two optical fibres must also receive radiation intensities which are different and still measurable accurately and reliably even in the areas where the curve has least slope (for example at the top) so that for this reason the said ends should be as far distant from each other as possible.

In view of these two opposing tendencies the preferred compromise is to have the distance "A" between the ends of the optical fibres equal to about 1 mm, but distances between 0.5 mm and 1.5 mm are acceptable.

The above description makes it clear that the method and the optical sensor which object of the present invention achieve the desired purpose of making the determination of the position of the mobile body independent of spurious movements of the encoder place relative to the mobile body and of spurious variations in the intensity of the source of light radiation.

The said purposes have been achieved by eliminating the encoder plate; choosing a particular source of optical radiation, whose intensity varies in a continuous way along the direction of movement of the mobile body; putting the optical receivers directly facing the source without any interposed device; limiting the reciprocal displacement of source and receivers in such a way that the latter are always completely illuminated by the source; and by calculating the ratio between a first and a second combination of the electrical signals corresponding to the optical signals picked up by the otpical receivers.

Other variations of the method and the optical sensor object of the present invention may be apparent to those skilled in the art without departing thereby from the subject-matter of the claims.

## Claims

1. A method for determining the position of a mobile body (1) moving along a rectilinear direction ("r") and transversely with respect to a fixed reference body (4) comprising the steps of:
- associating with said bodies (1, 4) a source of optical radiation (2) and at least two optical receivers (5, 6) aligned side by side along the direction of movement ("r") of the mobile body (1),
- converting the intensity of the optical radiation (i₁, i₂) detected by each optical receiver (5, 6) into electrical signals (I₁, I₂) of corresponding intensity,
- calculating the ratio between a first and a second combination of said electrical signals (I₁, I₂), these combinations being different from one another,
said method being characterized in that:
- the source of optical radiation has an intensity which varies in a continuous way along the direction of movement ("r") of the mobile body (1) and is associated with one of said bodies while the optical receivers are associated with the other body,
- the optical receivers (5, 6) face directly the source of optical radiation (2) without any interposing device and are kept always completely illuminated, and
- a step of comparing the value obtained from said ratio between a first and a second combination of said electrical signals (I₁, I₂) with a predetermined scale of reference values containing a correspondence between the value obtained from said ratio and the position of the mobile body is provided.

2. A method according to claim 1 and including two optical receivers (5, 6) whose intensities of optical radiation (i₁, i₂) are transformed into two intensities of electrical signals (I₁, I₂) characterized in that said first combination is obtained by taking the difference between said intensities of electrical signals (I₁, I₂) while the second combination is obtained by summing said two intensities of electrical signals (I₁, I₂).

3. A method according to claim 1 and including two optical receivers (5, 6) whose intensities of optical radiations (i₁, i₂) are transformed into two intensities of electrical signals (I₁, I₂), characterized in that said first combination is formed by only one of said intensities of electrical signals (I₁, I₂) while said second combination is formed by only the other of said intensities of electrical signals (I₂, I₁).

4. An optical sensor, for determining the position of a mobile body (1) moving in a linear direction ("r") and transversely with respect to a fixed reference body (4), comprising:
- a source of optical radiation (2) and at least two optical receivers (5, 6), aligned side by side along the direction ("r") of movement of the mobile body (1), associated with said bodies (1, 4),
- means (9, 10) for transforming the intensities of the optical radiation (i₁, i₂) captured by each optical receiver (5, 6) into electrical signals (I₁, I₂) of intensities corresponding to the intensities of the optical radiations (i₁, i₂),
- means (17) for calculating the ratio between a first and a second combination of said intensities (I₁, I₂) of electrical signals, these combinations being different one from the other,
said optical sensor being characterized in that:
- the source of optical radiation (2) is integral with one of the bodies (1, 4) and has an intensity which varies in a continuous way along the direction ("r") of movement of the mobile body while the optical receivers (5, 6) are integral with the other one of said bodies and face directly the source of optical radiation without any interposed device and are completely illuminated by said source,
- and in that means (18) are provided for comparing the value obtained from said ratio between a first and a second combination of said intensities (I₁, I₂) with a predetermined scale of reference values containing a correspondence between the value obtained from said ratio and the position of the mobile body (1).

5. An optical sensor according to claim 4, characterized in that said source of optical radiation (2) is a laser diode (2) whose intensity of optical radiation varies in the direction ("r") of movement of the mobile body (1) according to a Gaussian curve.

6. An optical sensor according to claim 4, characterized in that said optical receivers (5, 6) are the free ends of optical fibres (7, 8).

7. An optical sensor according to claims 5 and 6, characterized in that the relative movement between the said source (2) and said free ends of said optical fibres (7, 8) is less or equal to the base of a cone whose semiangle at its vertex is equal to the acceptance angle of said optical fibres (7, 8).

8. An optical sensor according to claim 7 characterised in that the acceptance angle of said optical fibres (7, 8) is less than or equal to 15 degrees.

9. An optical sensor according to claims 6 and 7, characterised in that the distance ("L") between said source of optical radiation (2) and said optical receivers (5, 6), measured along the direction of propagation of said optical radiation is included in the range 5mm to 10mm.

10. An optical sensor according to claim 9, characterised in that said distance ("L") is approximately equal to 7.5mm.

11. An optical sensor according to claims 6 and 7, characterised in that the distance ("A") between the axes of said free ends (5, 6) of said optical fibres (7, 8) is comprised between 0.5mm and 1.5mm.

12. An optical sensor according to claim 11, characterised in that said distance ("A") is about 1 mm.

13. An optical sensor according to claims 5, 6 and 7 characterised in that in position of rest said free ends (5, 6) of said optical fibres (7, 8) are placed symmetrically about the axis of said Gaussian curve.

## Patentansprüche

1. Verfahren zur Determinierung bzw. Bestimmung der Position eines beweglichen Körpers (1), der sich entlang einer geradlinigen Richtung ("r") und mit Bezug auf einen ortsfesten Bezugskörper (4) quer bewegt, umfassend die Schritte des:
- Zuordnens zu den Körpern (1, 4) einer Quelle (2) optischer Strahlung und wenigstens zweier optischer Empfänger (5, 6), die Seite an Seite entlang der Bewegungsrichtung ("r") des beweglichen Körpers (1) ausgerichtet sind,
- Umwandelns der Intensität (i₁, i₂) der optischen Strahlung, die durch jeden optischen Empfänger (5, 6) festgestellt ist, zu elektrischen Signalen (I₁, I₂) entsprechender Intensität,
- Berechnens des Verhältnisses zwischen einer ersten und einer zweiten Kombination der elektrischen Signale (I₁, I₂), wobei diese Kombinationen verschieden voneinander sind, wobei
das Verfahren dadurch gekennzeichnet ist, daß
- die Quelle optischer Strahlung eine Intensität hat, die sich entlang der Bewegungsrichtung ("r") des beweglichen Körpers (1) kontinuierlich ändert, und die Quelle einem der Körper zugeordnet ist, während die optischen Empfänger dem anderen Körper zugeordnet sind,
- die optischen Empfänger (5, 6) der Quelle (2) optischer Strahlung direkt zugewandt sind ohne eine dazwischen angeordnete Einrichtung und immer vollständig angeleuchtet sind, und
- ein Schritt ausgeführt wird des Vergleichens des Wertes, der erhalten ist aus dem Verhältnis zwischen der ersten und der zweiten Kombination der elektrischen Signale (I₁, I₂) mit einer vorbestimmten Skala von Bezugswerten, die eine Entsprechung zwischen dem aus dem Verhältnis erhaltenen Wert und der Position des beweglichen Körpers enthalten.

2. Verfahren nach Anspruch 1, umfassend zwei optische Empfänger (5,6), deren Intensitäten (i₁, i₂) optischer Strahlung zu zwei Intensitäten (I₁, I₂) elektrischer Signale umgewandelt werden, dadurch gekennzeichnet, daß die genannte erste Kombination erhalten wird durch die Differenz zwischen den Intensitäten (I₁, I₂) der elektrischen Signale, während die zweite Kombination erhalten wird durch Summierung der beiden Intensitäten (I₁, I₂) der elektrischen Signale.

3. Verfahren nach Anspruch 1, umfassend zwei optische Empfänger (5,6) deren Intensitäten (i₁, i₂) optischer Strahlung zu zwei Intensitäten (I₁,I₂) elektrischer Signale umgewandelt werden, dadurch gekennzeichnet, daß die genannte erste Kombination gebildet ist durch nur eine der Intensitäten (I₁,I₂) der elektrischen Signale, während die zweite Kombination gebildet ist durch lediglich die andere der Intensitäten (I₁,I₂) der elektrischen Signale.

4. Optischer Fühler zum Bestimmen der Position eines beweglichen Körpers (1), der sich in einer linearen Richtung ("r") und mit Bezug auf einen ortsfesten Bezugskörper (4) quer bewegt, umfassend:
- eine Quelle (2) optischer Strahlung und wenigstens zwei optische Empfänger (5,6), die Seite an Seite entlang der Bewegungsrichtung ("r") des beweglichen Körpers (1) ausgerichtet und den Körpern (1,2) zugeordnet sind,
- eine Einrichtung (9,10) zum Umwandeln der Intensitäten (i₁,i₂) der optischen Strahlung, die von jedem optischen Empfänger (5,6) empfangen wird, zu elektrischen Signalen mit Intensitäten (I₁,I₂) entsprechend den Intensitäten (i₁,i₂) der optischen Strahlung,
- eine Einrichtung (17) zum Berechnen des Verhältnisses zwischen einer ersten und einer zweiten Kombination der Intensitäten (I₁,I₂) der elektrischen Signale, wobei diese Kombinationen voneinander verschieden sind, wobei
der optische Fühler dadurch gekennzeichnet ist, daß:
- die Quelle (2) optischer Strahlung mit einem der Körper (1,4) einheitlich oder integral gebildet ist und eine Intensität hat, die sich entlang der Bewegungsrichtung ("r") des beweglichen Körpers kontinuierlich ändert, während die optischen Empfänger (5,6) mit dem anderen der Körper einheitlich oder integral gebildet sind und der Quelle optischer Strahlung direkt zugewandt sind, ohne eine dazwischen angeordnete Einrichtung, und durch die Quelle vollständig beleuchtet oder angeleuchtet sind, und daß
- eine Einrichtung (18) vorgesehen ist zum Vergleichen des aus dem Verhältnis zwischen einer ersten und einer zweiten Kombination der Intensitäten (I₁,I₂) erhaltenen Wertes mit einer vorbestimmten Skala von Bezugswerten, die eine Entsprechung zwischen dem aus dem Verhältnis erhaltenen Wert und der Position des beweglichen Körpers (1) enthalten.

5. Optischer Fühler nach Anspruch 4, dadurch gekennzeichnet, daß die Quelle (2) optischer Strahlung eine Laserdiode (2) ist, deren Intensität optischer Strahlung sich in der Bewegungsrichtung ("r") des beweglichen Körpers (1) nach einer Gauß'schen Kurve ändert.

6. Optischer Fühler nach Anspruch 4, dadurch gekennzeichnet, daß die optischen Empfänger (5,6) die freien Enden von optischen Fasern (7,8) sind.

7. Optischer Fühler nach Anspruch 5 und 6, dadurch gekennzeichnet, daß die relative Bewegung zwischen der Quelle (2) und den freien Enden der optischen Fasern (7,8) kleiner oder gleich der Basis eines Kegels ist, dessen Halbwinkel an seiner Spitze gleich dem Annahme- oder Eingangswinkel der optischen Fasern (7,8) ist.

8. Optischer Fühler nach Anspruch 7, dadurch gekennzeichnet, daß der Annahme- oder Eingangswinkel der optischen Fasern (7,8) kleiner als oder gleich 15° ist.

9. Optischer Fühler nach den Ansprüchen 6 und 7, dadurch gekennzeichnet, daß der Abstand ("L") zwischen der Quelle (2) optischer Strahlung und den optischen Empfängern (5,6), gemessen entlang der Richtung der Ausbreitung der optischen Strahlung, im Bereich von 5 mm bis 10 mm liegt.

10. Optischer Fühler nach Anspruch 9, dadurch gekennzeichnet, daß der Abstand ("L") annähernd gleich 7,5 mm ist.

11. Optischer Fühler nach den Ansprüchen 6 und 7, dadurch gekennzeichnet, daß der Abstand ("A") zwischen den Achsen der freien Enden (5,6) der optischen Fasern (7,8) zwischen 0,5 und 1,5 mm liegt.

12. Optischer Fühler nach Anspruch 11, dadurch gekennzeichnet, daß der Abstand ("A") etwa 1 mm beträgt.

13. Optischer Fühler nach den Ansprüchen 5, 6 und 7, dadurch gekennzeichnet, daß in der Ruheposition die freien Enden (5,6) der optischen Fasern (7,8) um die Achse der Gauß'schen Kurve symmetrisch angeordnet sind.

## Revendications

1. Un procédé de détermination de la position d'un corps mobile (1) en déplacement le long d'une direction rectiligne ("r") et transversalement par rapport à un corps de référence fixe (4) comprenant les étapes consistant à :
- associer auxdits corps (1, 4) une source de rayonnement optique (2) et au moins deux récepteurs optiques (5, 6) alignés côte-à-côte le long de la direction de déplacement ("r") du corps mobile (1),
- convertir l'intensité du rayonnement optique (i₁, i₂) détecté par chaque récepteur optique (5, 6) en signaux électriques (I₁, I₂) d'une intensité correspondante,
- calculer le rapport entre une première et une deuxième combinaison desdits signaux électriques (I₁, I₂), ces combinaisons étant différentes l'une de l'autre,
lesdits procédés étant caractérisés en ce que :
- la source de rayonnement optique est d'une intensité qui varie de manière continue le long de la direction de déplacement ("r") du corps mobile (1) et est associée à l'un desdits corps tandis que les récepteurs optiques sont associés à l'autre corps,
- les récepteurs optiques (5, 6) sont directement tournés vers la source de rayonnement optique (2) sans aucun dispositif interposé et sont toujours maintenus complètement éclairés, et
- il est réalisé une étape de comparaison, de la valeur obtenue pour ledit rapport entre une première et une deuxième combinaisons desdits signaux électriques (I₁, I₂), avec une échelle prédéterminée de valeurs de référence contenant une correspondance entre la valeur obtenue pour ledit rapport et la position du corps mobile.

2. Un procédé selon la revendication 1 et incluant deux récepteurs optiques (5, 6) dont les intensités de rayonnement optique (i₁, i₂) sont transformées en deux intensités de signaux électriques (I₁, I₂), caractérisé en ce que ladite première combinaison est obtenue en prenant la différence entre lesdites intensités de signaux électriques (I₁, I₂) tandis que la deuxième combinaison est obtenue en additionnant lesdites deux intensités de signaux électriques (I₁, I₂).

3. Un procédé selon la revendication 1 et incluant deux récepteurs optiques (5, 6) dont les intensités de rayonnements optiques (i₁, i₂) sont transformées en deux intensités de signaux électriques (I₁, I₂), caractérisé en ce que ladite première combinaison n'est formée que par l'une desdites intensités de signaux électriques (I₁, I₂) alors que ladite deuxième combinaison n'est formée que par l'autre desdites intensités de signaux électriques (I₂, I₁).

4. Un capteur optique de détermination de la position d'un corps mobile (1) en déplacement dans une direction linéaire ("r") et transversalement par rapport à un corps de référence fixe, comprenant :
- une source de rayonnement optique (2) et au moins deux récepteurs optiques (5, 6) alignés côte-à-côte le long de la direction ("r") de déplacement dudit corps mobile (1), associés auxdits corps (1, 4),
- un moyen (9, 10) de transformation des intensités du rayonnement optique (i₁, i₂) relevé par chaque récepteur optique (5, 6) en signaux électriques (I₁, I₂) d'intensités correspondantes aux intensités des rayonnements optiques (i₁, i₂),
- un moyen (17) de calcul du rapport entre une première et une deuxième combinaisons desdites intensités (I₁, I₂) de signaux électriques, ces combinaisons étant différentes l'une de l'autre,
ledit capteur optique étant caractérisé en ce que :
la source de rayonnement optique (2) est d'un seul tenant avec l'un des corps (1, 4) et son intensité varie de façon continue le long de la direction ("r") de déplacement du corps mobile tandis que les récepteurs optiques (5, 6) sont d'un seul tenant avec l'autre desdits corps et sont directement tournés vers la source de rayonnement optique, sans aucun dispositif interposé, et sont complètement éclairés par ladite source,
- et en ce que des moyens (18) sont prévus pour comparer la valeur obtenue pour ledit rapport entre une première et une deuxième combinaison desdites intensités (I₁, I₂) avec une échelle prédéterminée de valeurs de référence contenant une correspondance entre la valeur obtenue pour ledit rapport et la position du corps mobile (1).

5. Un capteur optique selon la revendication 4, caractérisé en ce que ladite source de rayonnement optique est une diode laser (2) dont l'intensité de rayonnement optique varie dans la direction ("r") de déplacement du corps mobile (1) selon une courbe de Gauss.

6. Un capteur optique selon la revendication 4, caractérisé en ce que lesdits récepteurs optiques (5, 6) sont les extrémités libres de fibres optiques (7, 8).

7. Un capteur optique selon les revendications 5 et 6, caractérisé en ce que le déplacement relatif entre ladite source (2) et lesdites extrémités libres desdites fibres optiques (7, 8) est égal ou inférieur à la base d'un cône dont le demi-angle au sommet est égal à l'angle d'acceptation desdites fibres optiques (7, 8).

8. Un capteur optique selon la revendication 7, caractérisé en ce que l'angle d'acceptation desdites fibres optiques (7, 8) est égal ou inférieur à 15 degrés.

9. Un capteur optique selon les revendications 6 et 7, caractérisé en ce que la distance ("L") entre ladite source de rayonnement optique (2) et lesdits récepteurs optiques (5, 6), mesurée le long de la direction de propagation dudit rayonnement optique, est incluse dans la plage de 5 mm à 10 mm.

10. Un capteur optique selon la revendication 9, caractérisé en ce que ladite distance ("L") est approximativement égale à 7,5 mm.

11. Un capteur optique selon les revendications 6 et 7, caractérisé en ce que la distance ("A") entre les axes desdites extrémités libres (5, 6) desdites fibres optiques (7, 8) est comprise entre 0,5 mm et 1,5 mm.

12. Un capteur optique selon la revendication 11, caractérisé en ce que ladite distance ("A") est d'environ 1 mm.

13. Un capteur optique selon la revendication 5, 6 et 7 caractérisé en ce que lesdites extrémités libres (5, 6) desdites fibres optiques sont placées, dans la position de repos, de manière symétrique autour de l'axe de la courbe de Gauss.
